# EUROPEAN PATENT APPLICATION

(11) **EP 4 760 901 A1**
(43) Date of publication of application: **17.06.2026**
(21) Application number: 25772272.8
(22) Date of filing: 18.02.2025
(51) Int. Cl.: H01M 50/183, H01M 50/112, H01M 50/147, H01M 50/249

(54) **BATTERY CASE, AND BATTERY PACK AND VEHICLE COMPRISING SAME**

(30) Priority: 13.03.2024 KR 20240035446
(71) Applicant: LG Energy Solution, Ltd., Seoul 07335 (KR)
(72) Inventor: KANG, Dahoon, Daejeon 34122 (KR)
(74) Representative: Plasseraud IP
(86) International application number: PCT/KR2025/099441
(87) International publication number: WO 2025/193026

(57) **Abstract**

A battery case according to the present invention comprises a gasket, wherein the gasket has a plurality of protruding portions protruding in a facing direction in a region facing one of a pack frame or the case lid, and at least one of the plurality of protruding portions has an asymmetric cross-sectional shape that is inclined such that a protruding end portion is biased in the inward direction or outward direction of a gap.

## Description

### Technical Field

The present disclosure relates to a battery case, a battery pack and a vehicle including the same.

### Background Art

As the demand for portable electronic devices such as laptops, video cameras, and portable cell phones has sharply increased, and the commercialization of robots and electronic vehicles is in full swing, research on high-performance rechargeable batteries capable of repetitive charging and discharging is ongoing.

Rechargeable batteries commercialized at present include a nickel-cadmium battery, a nickel-metal hydride battery, a nickel-zinc battery, and a lithium rechargeable battery, and among them, since a memory effect, referring to a phenomenon where chargeable capacity of a battery decreases when charging the battery before the battery is completely discharged, rarely occurs in a lithium rechargeable battery compared to a nickel-based rechargeable battery, a lithium rechargeable battery is spotlighted for having advantages of being free to charge and discharge, having a low self-discharge rate, and having high energy density.

Such a lithium rechargeable battery mainly uses lithium-based oxide and a carbon material as a positive electrode active material and a negative electrode active material, respectively. A lithium rechargeable battery is provided with an electrode assembly, where a positive electrode plate and a negative electrode plate respectively coated with the positive electrode and negative electrode active materials are disposed with a separator in between, and an external material, in other words, a battery case, sealing and storing the electrode assembly with electrolyte.

Generally, a lithium rechargeable battery may be classified, depending on a shape of an external material, as a can-shaped rechargeable battery, where an electrode assembly is built in a metal can, and a pouch-type rechargeable battery, where an electrode assembly is built in a pouch made of an aluminum laminate sheet.

Recently, rechargeable batteries are widely used not only for small devices such as a portable electronic device but also for medium and large devices such as an electric vehicle or an energy storage system (ESS) for driving or storing energy.

Such rechargeable batteries are electrically connected to each other and stored inside a module case together to compose a battery module, and the battery modules are electrically connected in a compact space to increase energy density to compose a battery pack.

Such a battery case included in a battery module or a battery pack is provided with a gasket to seal an interior space. As airtightness is reduced at some parts of the gasket, there has been a problem where gas produced internally leaks at a pressure lower than a designed pressure. Accordingly, the development of a battery case with improved airtightness and uniform airtightness throughout the entire area is necessary.

### Detailed Description of the Invention

### Technical Goals

The present disclosure is designed in consideration of the aforementioned problem and intended to provide a battery case with improved airtightness.

### Technical solutions

A battery case according to an example embodiment of the present disclosure may include a pack frame configured to form an accommodating space for a plurality of battery cells, a case lid configured to cover the accommodating space, and a gasket interposed at a gap formed along an adjacent boundary of the pack frame and the case lid. The gasket may be provided with a protruding part protruding, at an area facing one of the pack frame and the case lid, toward a facing direction. The protruding part may extend along the adjacent boundary of the pack frame and the case lid, is provided as one of a plurality of protruding parts arranged along an inward direction or an outward direction of the gap, and has a cross-sectional shape in which a width is wider toward a base end portion from a protruding end portion. At least one of the plurality of protruding parts may have an asymmetric cross-sectional shape in which the protruding end portion is tilted toward the inward direction or the outward direction of the gap.

The plurality of protruding parts may be arranged at an equal interval along the inward direction or the outward direction of the gap.

Among the plurality of protruding parts, a protruding part positioned further inward than a center of the gap may have a cross-sectional shape in which the protruding end portion is tilted toward the inward direction, and a protruding part positioned further outward than the center of the gap may have a cross-sectional shape in which the protruding end portion is tilted toward the outward direction.

A degree of tilt of the protruding end portion, with regard to a cross-sectional shape of the gasket, may be defined as an acute angle formed by a line segment connecting the protruding end portion to a midpoint between two boundaries of the base end portion with respect to a line segment connecting two boundaries of the base end portion.

The degree of tilt may be less than 90 degrees and equal to or greater than 68 degrees.

The degree of tilt may be less than 90 degrees and equal to or greater than 79 degrees.

The degree of tilt may be less than or equal to 79 degrees and equal to or greater than 68 degrees.

The degree of tilt may be 79 degrees.

Each of the plurality of protruding parts may protrude to an identical height toward a vertical direction on a surface of the gasket provided with the plurality of protruding parts.

In the plurality of protruding parts, a distance between two boundaries of the base end portion of each plurality of the plurality of protruding parts may be identical.

A number of the plurality of protruding parts is odd. The protruding part positioned in a center may have a symmetric cross-sectional shape in which the protruding end portion is not tilted toward either the inward direction or the outward direction of the gap.

The gasket may include a plurality of coupling parts that are areas directly pressed by a fastening member. The plurality of coupling parts may be positioned in a center of the gap.

A battery pack according to an example embodiment of the present disclosure may include the battery case according to the present disclosure.

A vehicle according to an example embodiment of the present disclosure may include the battery pack according to the present disclosure.

### Effects of the Invention

According to an aspect of the present disclosure, it is possible to maintain a substantially uniform airtightness throughout an entire area of a gasket. A cross-sectional shape of a pressed protruding part may have a substantially uniform shape regardless of a pressed location. Accordingly, when internal pressure of the battery case increases, it is possible for the gasket to prevent gas from leaking due to broken airtightness at a pressure lower than a designed venting pressure, allowing gas to be discharged at a targeted location through a venting device even when internal pressure increases more later to be higher pressure than the venting pressure.

### Brief Description of Drawings

FIG. 1 is an exploded perspective view of a battery case according to an example embodiment of the present disclosure.
FIG. 2 is a combined perspective view of a battery case according to an example embodiment of the present disclosure.
FIG. 3 is a diagram illustrating a gasket included in a battery case according to an example embodiment of the present disclosure.
FIG. 4 is a diagram illustrating a coupling relation of a pack frame, a case lid, a gasket, and a fastening member included in a battery case according to an example embodiment of the present disclosure.
FIG. 5 is a diagram illustrating a cross section of a gasket included in a cross section taken along C-C' line of FIG. 2.
FIG. 6 is a diagram illustrating a gasket according to Comparative Example 1.
FIG. 7 is a diagram illustrating a gasket pressed by a fastening member according to Comparative Example 1.
FIG. 8 is a diagram illustrating a gasket included in a battery case according to an example embodiment of the present disclosure pressed by a fastening member.
FIG. 9 is a diagram illustrating an enlarged view of a part of FIG. 5.
FIG. 10 is a diagram illustrating a result of a simulation according to Comparative Example 1.
FIG. 11 is a diagram illustrating a result of a simulation according to Example 1 according to the present disclosure.
FIG. 12 is a diagram illustrating a result of a simulation according to Example 2 according to the present disclosure.
FIG. 13 is a diagram illustrating a result of a simulation according to Comparative Example 2.
FIG. 14 is a diagram illustrating a result of a simulation according to Comparative Example 3.
FIG. 15 is a diagram illustrating a result of a simulation according to Comparative Example 4.
FIG. 16 is a diagram illustrating a gasket and a fastening member according to an example embodiment of the present disclosure.
FIG. 17 is a diagram illustrating a vehicle according to an example embodiment of the present disclosure.

### Mode for Carrying Out the Invention

Before a detailed description of the present disclosure, the terms or words used in this specification and the claims should not be construed as being limited to their general or lexical meanings, and based on the principle that the applicant may properly define the disclosure with a notion of terms in a way that best explains the disclosure, should be interpreted as meanings and notions corresponding to the technical idea of the present disclosure. Accordingly, the example embodiments described in this specification and the configurations shown in the drawings represent merely the most desired embodiments of the present disclosure and do not encompass the entire technical idea of the present disclosure. Therefore, at the point of the present application, the possibility of various equivalents and modified examples that may serve as replacements should be understood.

Identical reference numbers or signs described in each drawing appended to this specification may represent components or elements performing practically the same functions. For the convenience of explanation and understanding, different example embodiments may use the same reference numbers or signs for explanation. In other words, when a plurality of drawings illustrate a component having the same reference number, not all the plurality of drawings may indicate one example embodiment.

In the description below, a singular expression includes a plural expression unless clearly indicated otherwise in context. Terms such as "comprise or include" or "configure" should be understood as indicating the existence of a feature, number, step, operation, element, component, or combination thereof described in this specification, and the terms do not exclude in advance the existence or the possibility of one or more additional features, numbers, steps, operations, elements, components, or combinations thereof.

Furthermore, in the description below, expressions such as above, upper portion, below, lower portion, side surface, frontside, and backside are expressed based on directions shown in drawings, and when a direction of an object changes, the expressions may be expressed differently.

In addition, to distinguish one element from another, terms including ordinals such as "first" and "second" may be used in this specification and claims. Such ordinals are used to distinguish identical or similar elements from each other, and by using such ordinals, the terms should not be construed as having limited meanings. As an example, elements coupled to such ordinals should not be construed as having a limited order of use or order of arrangement by the numbers. As occasion demands, each ordinal may be replaced by each other to be used.

Hereinafter, example embodiments of the present disclosure are described in detail with reference to the accompanying drawings. However, the spirit of the present disclosure may not be limited to suggested example embodiments. For example, a person of ordinary skill in the art who understands the spirit of the present disclosure may suggest other example embodiments included within the scope of the spirit of the present disclosure through adding, modifying, or deleting elements, but it may be understood that such suggestions may be included within the scope of the spirit of the present disclosure. Forms, sizes, and the like of elements in the drawings may be exaggerated for clearer explanation.

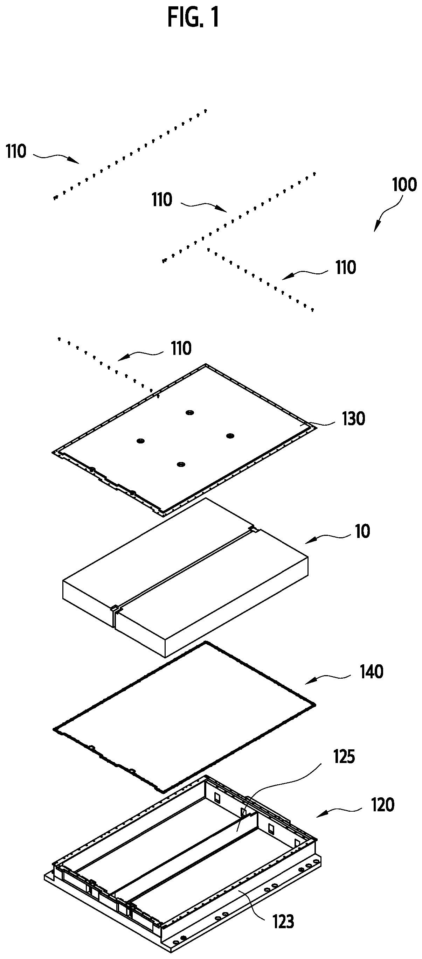

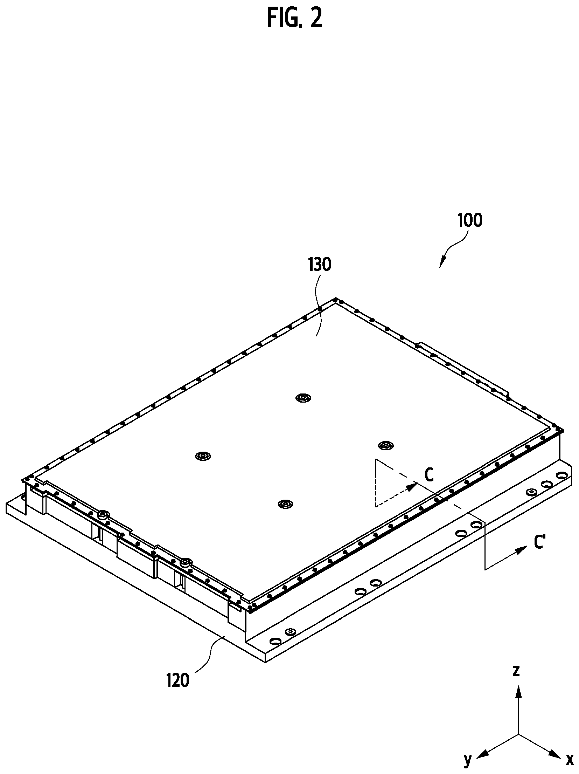

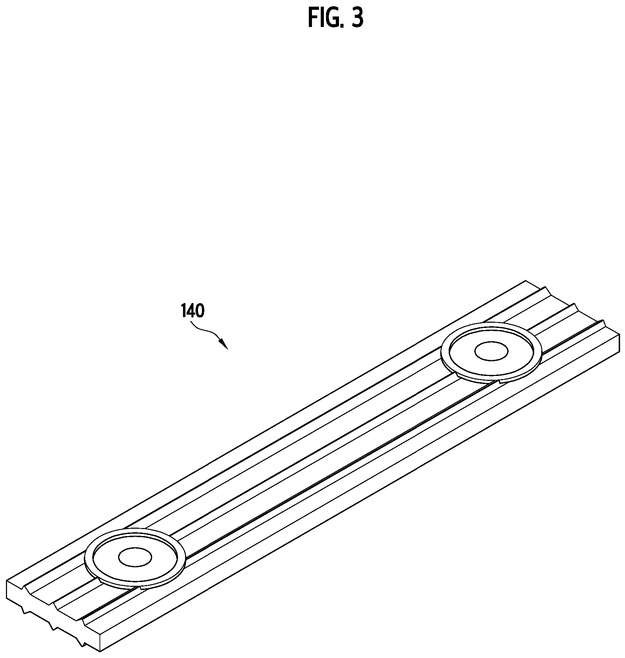

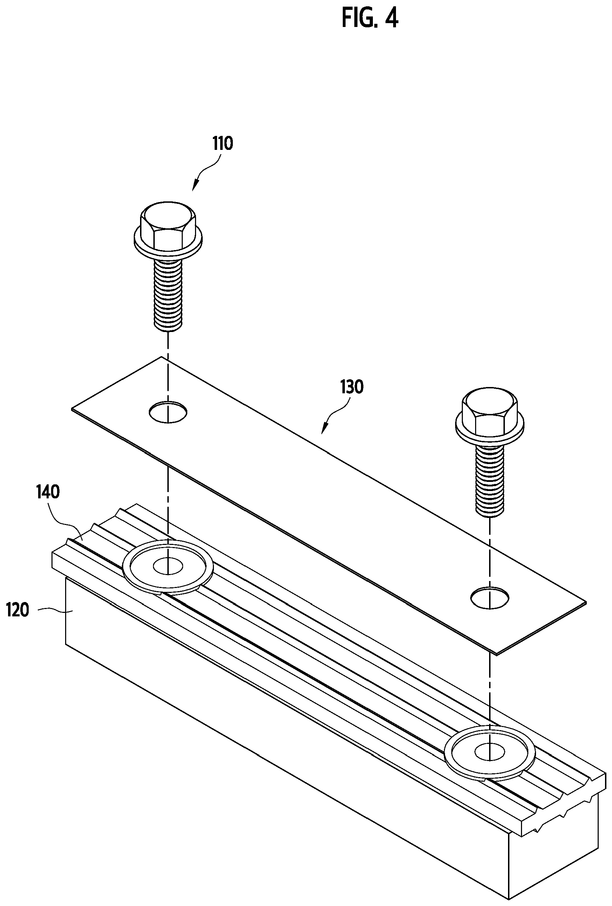

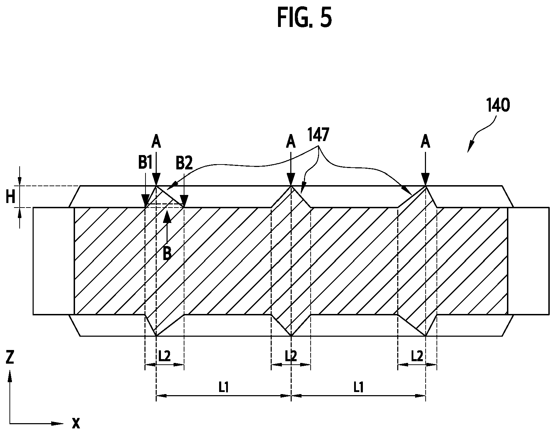

FIG. 1 is an exploded perspective view of a battery case 100 according to an example embodiment of the present disclosure. FIG. 2 is a combined perspective view of the battery case 100 according to an example embodiment of the present disclosure. FIG. 3 is a diagram illustrating a gasket 140 included in the battery case 100 according to an example embodiment of the present disclosure. FIG. 4 is a diagram illustrating a coupling relation of a pack frame 120, a case lid 130, the gasket 140, and a fastening member 110 included in the battery case 100 according to an example embodiment of the present disclosure. FIG. 5 is a diagram illustrating a cross section of the gasket 140 included in a cross section taken along C-C' line of FIG. 2.

Referring to FIGS. 1 to 5, the battery case 100 may include the pack frame 120, the case lid 130, and the gasket 140.

The pack frame 120 may be configured to form an accommodating space for a plurality of battery cells 10. In the accommodating space, a battery module including the plurality of battery cells 10 may be accommodated. For example, when the pack frame 120 accommodates a plurality of battery modules, the pack frame 120 may be provided with a frame body 123 and a partition wall 125. The frame body 123 may be in a box shape with a top opened and may accommodate the plurality of the battery cells 10 inside. The partition wall 125 may divide an interior space of the frame body 123. The partition wall 125 may be provided in a space corresponding to a space between the plurality of battery cells 10 adjacent to each other. Meanwhile, the pack frame 120 is not limited to the structure illustrated and described herein, and for example, the frame body 123 may be composed of a bottom plate, an end plate, a front plate, and a side plate.

The case lid 130 may be configured to cover the accommodating space. The case lid 130 may be in a cover shape covering a top opening portion of the frame body 123.

The gasket 140 may be interposed at a gap formed along an adjacent boundary of the pack frame 120 and the case lid 130. The gasket 140 may be interposed between the pack frame 120 and the case lid 130. The gasket 140 may seal a space between the pack frame 120 and the case lid 130. The gasket 140 may be interposed along perimeters of the pack frame 120 and the case lid 130.

In the description above, along an adjacent boundary of the pack frame 120 and the case lid 130 may refer to along an edge of the pack frame 120 and the case lid 130 between the pack frame 120 and the case lid 130.

The gasket 140 may be provided with a protruding part 147. The protruding part 147 may protrude, at an area facing one of the pack frame 120 and the case lid 130, toward a facing direction.

The protruding part 147 may extend along perimeters of the pack frame 120 and the case lid 130. A plurality of protruding parts 147 may be provided. The plurality of protruding parts 147 may be arranged along an inward direction or an outward direction of the gap. The inward direction or the outward direction of the gap may substantially lie at right angles to a direction along an adjacent boundary of the pack frame 120 and the case lid 130. Referring to FIG. 2, the inward direction of the gap may refer to a direction toward an accommodating space relative to a vertical wall of the frame body 123, and the outward direction of the gap may refer to the opposite direction. Relative to the vertical wall of the frame body 123 corresponding to a cross section taken along C-C' line of FIG. 2 (see FIG. 5), the inward direction of the gap may refer to a negative direction of an X-axis, and the outward direction of the gap may refer to a positive direction of the X-axis. However, the inward or outward direction of the gap may change depending on a location in which the gasket 140 is provided, and not strictly limited thereto.

The protruding part 147 may have a cross-sectional shape in which a width is wider toward a base end portion B from a protruding end portion A. Here, the base end portion B may refer to a point or an area in which the protruding part 147 starts protruding on one surface of the gasket 140. The cross-sectional shape of the protruding part 147 may be a triangular shape in which a line segment connecting two boundaries B1 and B2 of the base end portion B is to be a base line, and a length along a vertical direction to the protruding end portion A from the base line is to be a height.

At least one of the plurality of protruding parts 147 may have an asymmetric cross-sectional shape in which the protruding end portion A is tilted toward the inward direction or the outward direction of the gap. In other words, in a cross-sectional shape of at least one of the plurality of protruding parts 147, the protruding end portion A may not be positioned at an identical vertical line to a midpoint between the two boundaries B1 and B2 of the base end portion B.

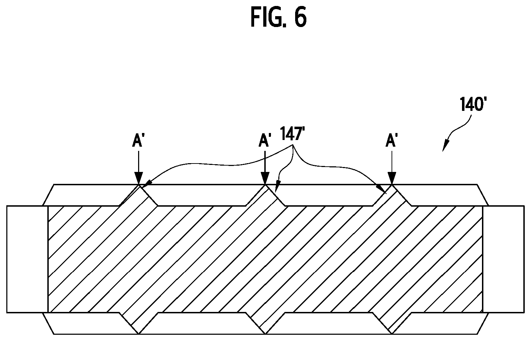

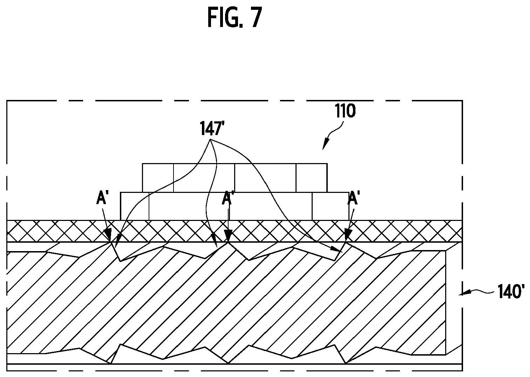

FIG. 6 is a diagram illustrating a gasket 140' according to Comparative Example 1. FIG. 7 is a diagram illustrating the gasket 140' pressed by a fastening member 110' according to Comparative Example 1.

Referring to FIGS. 6 and 7, a protruding end portion A' of a pressed protruding part 147' of Comparative Example 1 may be tilted to a pressed location. When the fastening member 110' is fastened at a center of the gap and presses the gasket 140', the protruding end portion A' of the protruding part 147' among a plurality of protruding parts 147' positioned further inward than the center of the gap may have a cross-sectional shape tilted toward the outward direction, and the protruding end portion A' of the protruding part 147' among the plurality of protruding parts 147' positioned further outward than the center of the gap may have a cross-sectional shape tilted toward the inward direction. Accordingly, there has been a problem where contact pressure decreases as the plurality of protruding parts 147' have different cross-sectional shapes after being pressed.

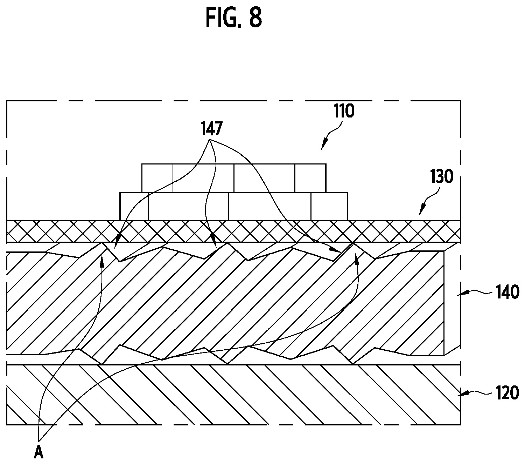

FIG. 8 is a diagram illustrating the gasket 140 included in the battery case 100 pressed by the fastening member 110 according to an example embodiment of the present disclosure.

Referring to FIG. 8, airtightness of the gasket 140 may be maintained substantially uniform throughout an entire area by this configuration of the present disclosure. The protruding part 147 positioned outward of the gap may receive an asymmetric force by the fastening member 110 positioned relatively inward, and the protruding part 147 positioned inward of the gap may receive an asymmetric force by the fastening member 110 positioned relatively outward, and in response to the imbalance of forces, by allowing the protruding part 147 to have a cross-sectional shape tilting in the opposite direction to where the uneven force is applied, a symmetric cross-sectional shape may be formed as shown in FIG. 8, even when pressed by the fastening member 110. Meanwhile, as the protruding part 147 positioned in a center among the plurality of protruding parts 147 may not receive an uneven force even when pressed by the fastening member 110, a non-tilted cross-sectional shape may be formed.

Accordingly, all the protruding parts 147 may have substantially uniform cross-sectional shape after being pressed, regardless of a location being pressed. Accordingly, when internal pressure of the battery case 100 increases, the gasket 140 may prevent gas from leaking due to broken airtightness at a pressure lower than a designed venting pressure, allowing gas to be discharged at a targeted location through a venting device even when internal pressure increases more later to be higher pressure than the venting pressure.

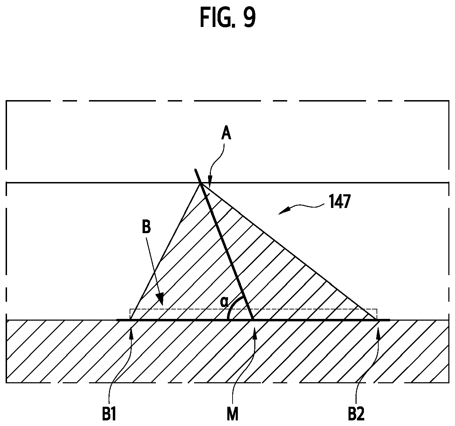

FIG. 9 is a diagram illustrating an enlarged view of a part of FIG. 5.

Referring to FIG. 9, a degree of tilt of the protruding end portion A may be defined, with regard to a cross-sectional shape of the gasket 140, as an acute angle formed by a line segment connecting the protruding end portion A to a midpoint M of the two boundaries B1 and B2 of the base end portion with respect to a line segment connecting the two boundaries B1 and B2 of the base end portion.

As described above, the degree of tilt of the protruding end portion A may be configured to allow a cross-sectional shape of the pressed protruding part 147 to have a substantially uniform shape regardless of a location of being pressed. In other words, when the protruding end portion A is excessively tilted, airtightness may rather decrease, so an appropriate degree of tilt setting is required.

Accordingly, a simulation was conducted for the appropriate degree of tilt setting of the protruding end portion A. The simulation was conducted for a case where the thickness of the case lid 130 is set to 2 millimeters (mm), the thickness of the gasket 140 excluding the protruding part 147 is set to 3mm, and the fastening member 110 is fastened with a torque of 10 newton meters (Nm). In such a case, a minimum value of a contact pressure of the gasket 140 at an area between two fastening members adjacent to each other was measured, while adjusting a degree of tilt of the protruding end portion A. A result of the measurement is as shown below.

| | Degree of tilt of protruding part (°) | Contact pressure of gasket (MPa) | Rate of increase of contact pressure relative to Comparative Example 1 (%) |
|---|---|---|---|
| Comparative Example 1 | 90 | 22 | 0 |
| Example 1 | 79 | 25.9 | 17.7 |
| Example 2 | 68 | 24.9 | 13.2 |
| Comparative | 59 | 19.4 | -11.8 |
| Example 2 | | | |
| Comparative Example 3 | 51 | 12.7 | -42.3 |
| Comparative Example 4 | 45 | 9.6 | -56.4 |

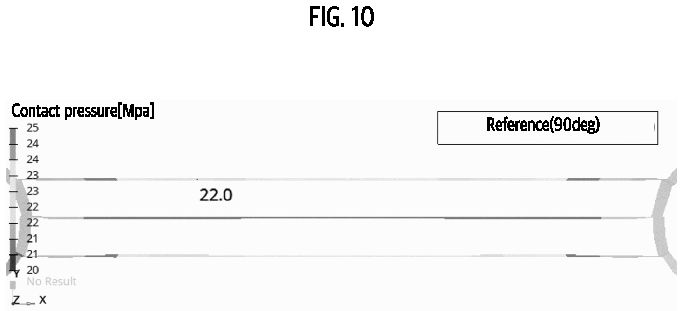

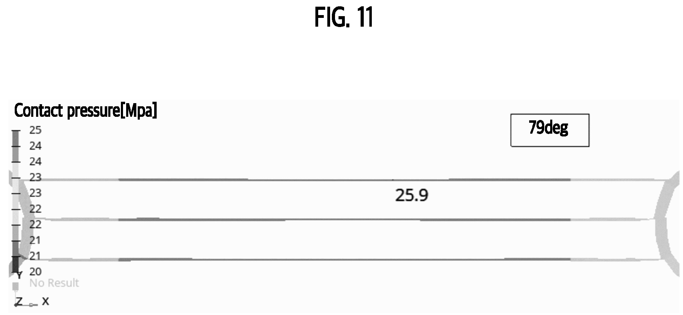

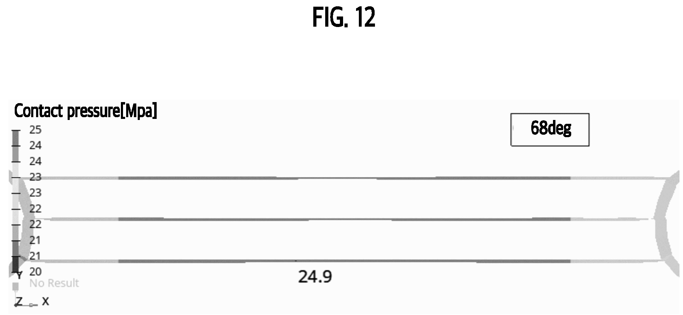

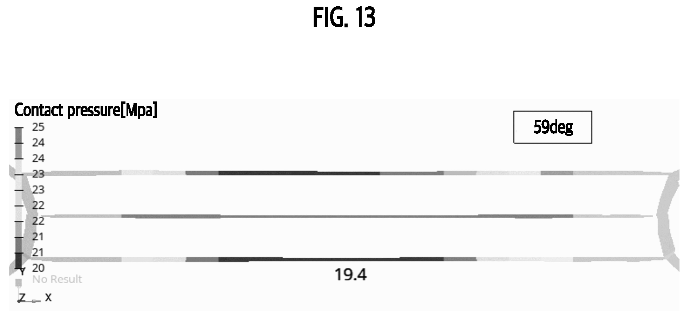

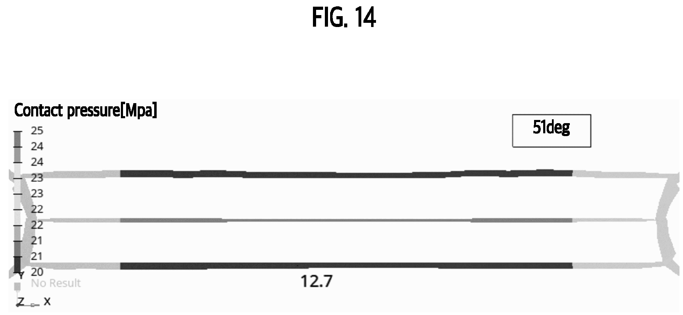

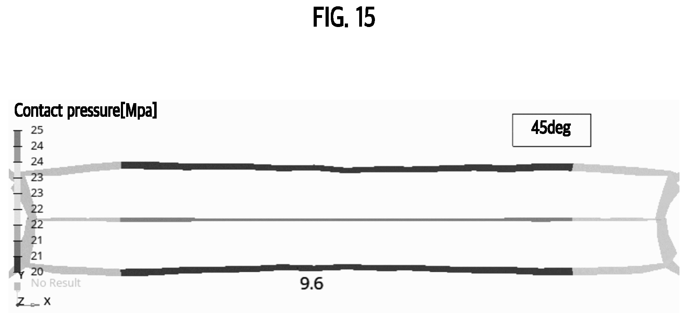

FIG. 10 is a diagram illustrating a result of a simulation according to Comparative Example 1. FIG. 11 is a diagram illustrating a result of a simulation according to Example 1 according to the present disclosure. FIG. 12 is a diagram illustrating a result of a simulation according to Example 2 according to the present disclosure. FIG. 13 is a diagram illustrating a result of a simulation according to Comparative Example 2. FIG. 14 is a diagram illustrating a result of a simulation according to Comparative Example 3. FIG. 15 is a diagram illustrating a result of a simulation according to Comparative Example 4.

Referring to FIGS. 10 to 15, the results of the simulation according to Comparative Examples and Examples according to the present disclosure are described.

In Comparative Example 1 where a degree of tilt of the protruding part 147 is set to 90 degrees, a minimum value of the contact pressure of the gasket 140 was measured as 22 mega-pascal (MPa).

In Example 1 where a degree of tilt of the protruding part 147 is set to 79 degrees, the contact pressure of the gasket 140 increased by 17.7% compared to Comparative Example 1.

In Example 2 where a degree of tilt of the protruding part 147 is set to 68 degrees, the contact pressure of the gasket 140 increased by 13.2% compared to Comparative Example 1.

In Comparative Example 2 where a degree of tilt of the protruding part 147 is set to 59 degrees, the contact pressure of the gasket 140 decreased by 11.8% compared to Comparative Example 1.

In Comparative Example 3 where a degree of tilt of the protruding part 147 is set to 51 degrees, the contact pressure of the gasket 140 decreased by 42.3% compared to Comparative Example 1.

In Comparative Example 4 where a degree of tilt of the protruding part 147 is set to 45 degrees, the contact pressure of the gasket 140 decreased by 56.4% compared to Comparative Example 1.

Looking into the overall simulation data, when a degree of tilt of the protruding part 147 is set to 79 degrees, the contact pressure of the gasket 140 increased the most compared to Comparative Example 1. In addition, according to Comparative Examples 2 to 4, when a degree of tilt of the protruding part 147 is set to equal to or less than 59 degrees, the contact pressure rather decreased compared to Comparative Example 1.

Accordingly, to increase the contact pressure of the gasket 140 compared to Comparative Example 1, the degree of tilt of the protruding part 147 may be within the numerical ranges below.

The degree of tilt of the protruding end portion A may be less than 90 degrees and equal to or greater than 68 degrees.

More specifically, the degree of tilt of the protruding end portion A may be less than 90 degrees and equal to or greater than 79 degrees.

More specifically, the degree of tilt of the protruding end portion A may be equal to or less than 79 degrees and equal to or greater than 68 degrees.

More specifically, the degree of tilt of the protruding end portion A may be 79 degrees.

Referring to FIG. 5 again, the gasket 140 used in the simulation is described in more detail.

The plurality of the protruding parts 147 may be arranged at an equal interval along the inward direction or the outward direction of the gap.

Relative to a state before the gasket 140 is pressed, the protruding part 147 positioned further inward than the center of the gap among the plurality of the protruding parts 147 may have a tilted cross-sectional shape where the protruding end portion A is tilted toward the inward direction.

Relative to the state before the gasket 140 is pressed, the protruding part 147 positioned further outward than the center of the gap among the plurality of the protruding parts 147 may have a tilted cross-sectional shape where the protruding end portion A is tilted toward the outward direction.

Relative to the state before the gasket 140 is pressed, the protruding part 147 positioned in the center may have a symmetric cross-sectional shape where the protruding end portion A is not tilted toward either the inward direction or the outward direction of the gap.

Each of the plurality of protruding parts 147 may protrude to an identical height toward a vertical direction on a surface of the gasket 140 provided with the plurality of protruding parts 147.

A distance between the two boundaries B1 and B2 of each of the base end portion of the plurality of protruding parts 147 may be identical.

The number of the plurality of the protruding parts 147 may be odd. For example, the number of the plurality of the protruding parts 147 may be three.

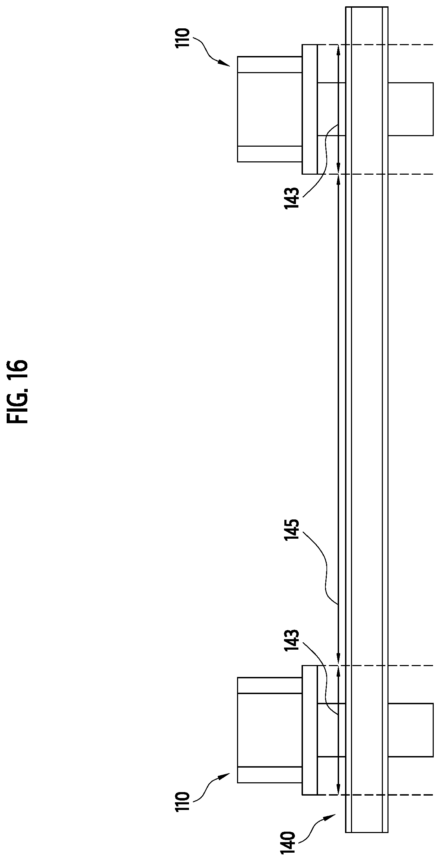

FIG. 16 is a diagram illustrating the gasket 140 and the fastening member 110 according to an example embodiment of the present disclosure.

Referring to FIG. 16, the gasket 140 may include a plurality of coupling parts 143. The plurality of coupling parts 143 may be areas that are directly pressed by the fastening member 110. The plurality of coupling parts 143 may be positioned in the center of the gap. The plurality of coupling parts 143 adjacent to each other may be spaced apart from each other. The coupling part 143 may be an area that is directly pressed by the fastening member 110 when the fastening member 110 is coupled to the case lid 130. The separation part 145 may be positioned between the two coupling parts 143 adjacent to each other.

Referring to FIG. 1 again, a battery pack 3 may include the battery case 100. Although not illustrated in the drawings, the battery pack 3 may further include other various elements in addition to the plurality of battery cells 10 and the battery case 100, for example, a battery management system (BMS), a relay, and a current sensor, which are elements of the battery pack 3 known at the time of application of the present disclosure.

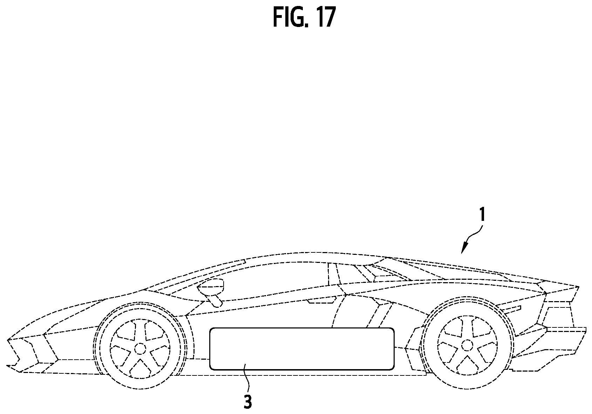

FIG. 17 is a diagram illustrating a vehicle 1 according to an example embodiment of the present disclosure.

Referring to FIG. 17, the vehicle 1 may include the battery pack 3. The vehicle 1 may further include other various elements included in the vehicle 1 in addition to the battery pack 3. For example, the vehicle 1 may further include a car body, a motor, or a control device such as an electronic control unit (ECU), in addition to the battery pack 3 according to the present disclosure.

As described above, example embodiments of the present disclosure are described referring to the accompanying drawings, but it is obviously understood by those skilled in the art that various and clear multiple modifications included within the spirit and scope of the present disclosure are possible from the above description. Accordingly, the scope of the present disclosure should be construed by the appended claims described to include such multiple modifications.

### [Description of Symbols]

1 Vehicle
3 Battery pack
10 Battery cell
100 Battery case
110 Fastening member
120 Pack frame
123 Frame body
125 Partition wall
130 Case lid
140 Gasket
143 Coupling part
145 Separation part
147 Protruding part
A Protruding end portion
B Base end portion
B1, B2 Two boundaries of base end portion

## Claims

1. A battery case, comprising:
a pack frame configured to form an accommodating space for a plurality of battery cells;
a case lid configured to cover the accommodating space; and
a gasket interposed at a gap formed along an adjacent boundary of the pack frame and the case lid,
wherein the gasket
is provided with a protruding part protruding, at an area facing one of the pack frame and the case lid, toward a facing direction,
wherein the protruding part
extending along the adjacent boundary of the pack frame and the case lid, is provided as one of a plurality of protruding parts arranged along an inward direction or an outward direction of the gap,
and has a cross-sectional shape in which a width is wider toward a base end portion from a protruding end portion, and
wherein at least one of the plurality of protruding parts
has an asymmetric cross-sectional shape in which the protruding end portion is tilted toward the inward direction or the outward direction of the gap.

2. The battery case of claim 1,
wherein the plurality of protruding parts
are arranged at an equal interval along the inward direction or the outward direction of the gap.

3. The battery case of claim 1,
wherein, among the plurality of protruding parts,
a protruding part positioned further inward than a center of the gap has a cross-sectional shape in which the protruding end portion is tilted toward the inward direction, and
a protruding part positioned further outward than the center of the gap has a cross-sectional shape in which the protruding end portion is tilted toward the outward direction.

4. The battery case of claim 1,
wherein a degree of tilt of the protruding end portion,
with regard to a cross-sectional shape of the gasket, is defined as an acute angle formed by a line segment connecting the protruding end portion to a midpoint between two boundaries of the base end portion with respect to a line segment connecting the two boundaries of the base end portion.

5. The battery case of claim 4,
wherein the degree of tilt
is less than 90 degrees and equal to or greater than 68 degrees.

6. The battery case of claim 4,
wherein the degree of tilt
is less than 90 degrees and equal to or greater than 79 degrees.

7. The battery case of claim 4,
wherein the degree of tilt
is less than or equal to 79 degrees and equal to or greater than 68 degrees.

8. The battery case of claim 4,
wherein the degree of tilt
is 79 degrees.

9. The battery case of claim 1,
wherein each of the plurality of protruding parts
protrudes to an identical height toward a vertical direction on a surface of the gasket provided with the plurality of protruding parts.

10. The battery case of claim 1,
wherein, in the plurality of protruding parts,
a distance between two boundaries of the base end portion of each of the plurality of protruding parts is identical.

11. The battery case of claim 1,
wherein a number of the plurality of protruding parts is odd, and
wherein a protruding part positioned in a center has a symmetric cross-sectional shape in which the protruding end portion is not tilted toward either the inward direction or the outward direction of the gap.

12. The battery case of claim 1,
wherein the gasket
includes a plurality of coupling parts that are areas directly pressed by a fastening member, and
wherein the plurality of coupling parts
is positioned in a center of the gap.

13. A battery pack comprising the battery case according to any one of claims 1 to 12.

14. A vehicle comprising the battery pack according to claim 13.
